# EUROPÄISCHE PATENTSCHRIFT

(11) **EP 1 498 295 B1**
(45) Veröffentlichungstag und Bekanntmachung des Hinweises auf die Patenterteilung: **26.03.2008**
(21) Anmeldenummer: 04016785.0
(22) Anmeldetag: 16.07.2004
(51) Int. Cl.: B60J 5/10, B62D 25/10, B32B 27/00, B62D 29/04

(54) **Heckklappe für ein Kraftfahrzeug**
Tailgate for a motor vehicle
Hayon arrière pour véhicule automobile

(30) Priorität: 17.07.2003 DE 20311028 U
(43) Veröffentlichungstag der Anmeldung: 19.01.2005
(73) Patentinhaber: Webasto AG, 82131 Stockdorf (DE)
(72) Erfinder: Braun, Robert, 82335 Berg (DE); Legler, Dirk, 86947 Weil (DE); De Gaillard, Francois, 75016 Paris (FR); Kölbl, Michael, 82061 Neuried (DE)

(56) Entgegenhaltungen:
- EP-A- 0 286 058
- EP-A- 1 359 005
- DE-A- 10 033 232
- DE-A- 19 847 873
- FR-A- 2 799 151
- GB-A- 2 078 628

## Beschreibung

Die vorliegende Erfindung betrifft eine Heckklappe für ein Kraftfahrzeug, die die im Oberbegriff des Anspruchs 1 definierten Merkmale aufweist. Eine derartige Heckklappe ist aus der DE 19 847 873 A1 bekannt.

Heckklappen für Kraftfahrzeuge sind üblicherweise als Stanzbiegeteile aus Stahl oder Aluminium ausgebildet, wobei diese einen mehrschaligen Aufbau bilden. Ferner ist es bekannt, eine Heckklappe für ein Kraftfahrzeug als Spritzgussteil aus dem Kunststoff SMC herzustellen.

In der EP 0 995 667 B1 ist ein Verbundbauteil für Fahrzeugkarosserien beschrieben, bei welchem eine tiefgezogene Außenhaut mit einem aufschäumbaren Kunststoff hinterschäumt wird, wobei dies beispielsweise nach dem LFI (long fibre injection) Verfahren erfolgen kann. Solche Verbundbauteile können gemäß der EP 0 995 667 B1 für alle Flächenbereiche der Fahrzeugkarosserie, einschließlich Klappen oder Deckel, verwendet werden.

In der DE 29 34 430 A1 ist ein als Sandwichplatte ausgebildetes Verbundbauteil beschreiben, welches von einer Wabenstruktur gebildet wird, die zwischen Deckschichten aus faserverstärktem Kunststoff liegt. Solche Verbundbauteile sind als insbesondere für Klappen an Personenkraftfahrzeugen verwendbar beschrieben.

In der DE 100 33 232 C2 ist ein Dachmodul für ein Kraftfahrzeug beschrieben, bei welchem eine Außenhaut, ein mit Hohlkammern versehenes Distanzteil sowie beiderseits des Distanzteils angeordnete Glasfasermatten vorgesehen sind, die mit PU (Polyurethan)-Schaum besprüht werden. Die Außenhaut wird dabei von einer tiefgezogenen Kunststofffolie gebildet.

Es ist Aufgabe der vorliegenden Erfindung, eine Heckklappe für ein Kraftfahrzeug zu schaffen, welche trotz hinreichender Steifigkeit ein relativ geringes Gewicht aufweist und möglichst kostengünstig gefertigt werden kann.

Diese Aufgabe wird erfindungsgemäß gelöst durch eine Heckklappe gemäß Anspruch 1. Bei der erfindungsgemäßen Lösung ist vorteilhaft, dass dadurch, dass mindestens ein Teil der Heckklappe als Verbundbauteil mit einer Außenhaut und einer Trägerstruktur ausgebildet ist, der Einsatz von Leichtbaumaterial ermöglicht wird, wobei dennoch eine hinreichende Steifigkeit- erzielt werden kann. Ferner können im Vergleich zu einer Heckklappe in herkömmlicher mehrschaliger Blechbauweise die Zahl der Prozeßschritte sowie die Werkzeuginvestitionskosten verringert werden. Außerdem kann mit der vorliegenden Erfindung auch durch die Möglichkeit der Integration von Einlegeteilen und Verkleidungsgmaterialien in die Trägerstruktur eine besonders kostengünstige Herstellung ermöglicht werden.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig. 1.: eine schematische perspektivische Ansicht einer erfindungsgemäßen Heckklappe für ein Kraftfahrzeug;
- Fig. 2: eine Schnittansicht entlang der Linie II-I von Fig. 1;
- Fig. 3: eine Schnittansicht entlang der Linie III-III von Fig. 1;
- Fig. 4: eine vergrößerte Darstellung des mit V bezeichneten Bereichs von Fig. 2.

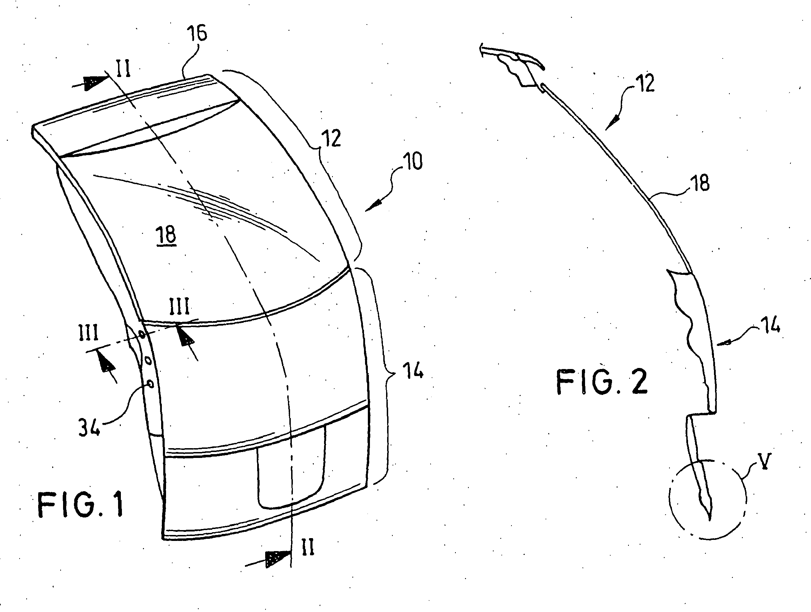

In Fig. 1 ist eine Heckklappe 10 für ein Kraftfahrzeug gezeigt, welche aus einem Oberteil 12 und einem Unterteil 14 besteht. Die Heckklappe 10 ist, beispielsweise am oberen Ende 16 des Oberteils 12, schwenkbar an der Fahrzeugkarosserie gelagert. An seinem unteren Ende ist das Oberteil 12 mit dem oberen Ende des Unterteils 14 fest verbunden, wie dies nachfolgend näher beschrieben ist. Das Oberteil 12, welches in an sich bekannter Weise ausgebildet ist, weist eine Heckscheibe 18 auf und wird im übrigen von Stanzbiegeteilen, insbesondere aus Stahl oder Aluminium, von Spritzgussteilen, insbesondere aus dem Kunststoff SMC, oder von Strangpressprofilen, insbesondere aus Aluminium, gebildet.

Das Unterteil 14 ist als Verbundbauteil ausgebildet und umfasst eine zur Fahrzeugaußenseite hin weisende Außenhaut 20 sowie eine Trägerstruktur 22, welche die Außenhaut trägt. Die Außenhaut 20 kann beispielsweise aus Aluminium, Stahlblech oder eingefärbtem Kunststoff hergestellt sein, wobei die Formgebung vorzugsweise in einem Spritzguss- oder Tiefziehverfahren erfolgt.

Die Trägerstruktur 22 wird vorzugsweise von zwei mit PU oder faserverstärktem PU, insbesondere mittels des LFI-Verfahrens hergestelltem PU, besprühten Glasfasermatten 24 bzw. 25 gebildet, zwischen welchen sich ein Abstandshalter 28 befindet, der von einer Hohlkammerstruktur oder einem Kunststoffschaum gebildet wird. Wenn es sich bei dem Abstandshalter 28 um eine Hohlkammerstruktur handelt, ist diese vorzugsweise aus Papier. Kunststoff oder Metall ausgebildet, und zwar vorzugsweise als Wabenstruktur.

Vorzugsweise ist die Außenhaut 20 mit der Trägerstruktur 22 hinterpresst, wobei in diesem Prozeßschritt zusätzlich auf der zum Fahrzeuginnenraum hingewandten Seite der Trägerstruktur 22 ein Dekormaterial 30 mit verpresst werden kann. Ferner können in dem Verpressungsschritt auch Einlegeelemente aus Kunststoff oder Metall mit in die Trägerstruktur 28 eingepresst werden. Solche Einlegeelemente können als Halterungen für die Funktion der Heckklappe 10 erforderlichen Anbauteile dienen.

Gemäß der Erfindung ist das Oberteil 12 mit der Trägerstruktur 22 des Unterteils 14 verpresst. Diese Verpressung wird in einem Arbeitsgang zusammen mit der Hinterpressung der Außenhaut 20 des Unterteils 14 mit der Trägerstruktur 22 zusammen ausgeführt.

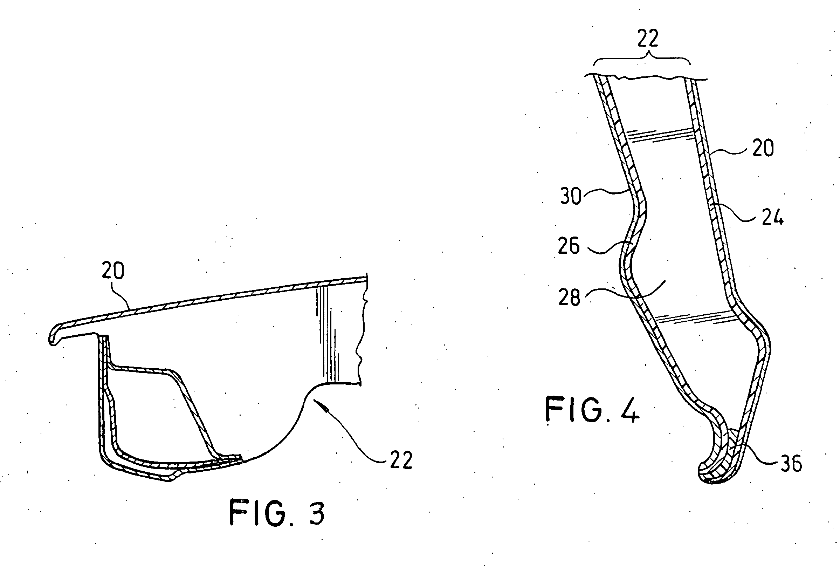

Wie aus Fig. 4 ersichtlich ist, kann im Umfangsrandbereich des Unterteils 14 im Bereich der Trägerstruktur 22 der Eintrag an PU bzw. faserverstärktem PU im Vergleich zu den übrigen Bereichen erhöht sein, um für eine Abdichtung des Umfangsrandbereichs zu sorgen (der Bereich mit erhöhtem PU-Eintrag ist in Fig. 4 schraffiert dargestellt und mit dem Bezugszeichen 36 versehen).

### Bezugszeichenliste

- 10: Heckklappe
- 12: Oberteil
- 14: Unterteil
- 16: oberes Ende von 12
- 18: Heckscheibe
- 20: Außenhaut
- 22: Trägerstruktur
- 24: Glasfasermatte
- 26: Glasfasermatte
- 28: Abstandshalter
- 30: Dekor
- 32: Einlegerelement
- 34: Befestigungsschraube
- 36: Randbereich

## Patentansprüche

1. Heckklappe für ein Kraftfahrzeug, mit einem an der Fahrzeugkarosserie befestigbaren Oberteil (12) und einem mit dem unteren Ende des Oberteils fest verbundenen Unterteil (14), **dadurch gekennzeichnet, dass** das Unterteil als Verbundbauteil ausgebildet ist, das eine Außenhaut (20) und eine Trägerstruktur (22) für die Außenhaut aufweist, und das Oberteil mit der Trägerstruktur des Unterteils verpresst ist.

2. Heckklappe gemäß Ansprüch 1, **dadurch gekennzeichnet, dass** die Trägerstruktur (22) gebildet wird von zwei mit PU oder faserverstärktem PU, insbesondere LFI-verstärktem PU, besprühten Glasfasermatten (24, 26), zwischen welchen sich ein Abstandshalter (28) aus einer Hohlkammerstruktur oder einem Kunststoffschaum befindet.

3. Heckklappe gemäß Anspruch 1 oder 2, **dadurch gekennzeichnet, dass** das Oberteil (12) Stanzbiegeteile, insbesondere aus Stahl oder Aluminium, Spritzgussteile, insbesondere aus SMC, oder Strangpressprofile, insbesondere aus Aluminium, aufweist.

4. Heckklappe gemäß einem der Ansprüche 1 bis 3, **dadurch gekennzeichnet, dass** das Oberteil (12) eine Heckscheibe (18) aufweist.

5. Heckklappe gemäß einem der vorhergehenden Ansprüche, **dadurch gekennzeichnet, dass** die Außenhaut (20) aus Aluminium, Stahlblech oder eingefärbtem Kunststoff hergestellt ist.

6. Heckklappe gemäß Anspruch 5, **dadurch gekennzeichnet, dass** die Außenhaut (20) in einem Spritzguss- oder Tiefziehverfahren hergestellt ist.

7. Heckklappe gemäß einem der vorhergehenden Ansprüche, **dadurch gekennzeichnet, dass** die Außenhaut (20) mit der Trägerstruktur (22) verpresst ist.

8. Heckklappe gemäß einem der vorhergehenden Ansprüche, **dadurch gekennzeichnet, dass** der Abstandshalter (28) als Hohlkammerstruktur, insbesondere Wabenstruktur, aus Papier, Kunststoff oder Metall ausgebildet ist.

9. Heckklappe gemäß einem der vorhergehenden Ansprüche, **dadurch gekennzeichnet, dass** die Trägerstruktur (22) auf der zum Fahrzeuginnenraum hingewandten Seite mit einem Dekormaterial (30) versehen ist, welches mit der Trägerstruktur verpresst ist.

10. Heckklappe gemäß einem der vorhergehenden Ansprüche, **dadurch gekennzeichnet, dass** in die Trägerstruktur (22) Einlegerelemente (32), Insbesondere aus Kunststoff oder Metall, eingepresst sind.

11. Heckklappe gemäß einem der vorhergehenden Ansprüche, **dadurch gekennzeichnet, dass** im Umfangsrandbereich (36) der Trägerstruktur (22) der Eintrag an PU bzw. faserverstärktem PU erhöht ist, um den Umfangsrandbereich abzudichten.

## Claims

1. Tailgate for a motor vehicle, with an upper part (12) which can be fastened to the vehicle body, and with a lower part (14) which is connected fixedly to the lower end of the upper part, **characterized in that** the lower part is designed as a composite component which has a skin (20) and a support structure (22) for the skin, and the upper part is pressed to the support structure of the lower part.

2. Tailgate according to Claim 1, **characterized in that** the support structure (22) is formed from two glass fibre mats (24, 26) which are sprayed with PU or fibre-reinforced PU, in particular LFI-reinforced PU, and between which a spacer (28) comprising a hollow chamber structure or a plastic foam is located.

3. Tailgate according to Claim 1 or 2, **characterized in that** the upper part (12) has punched and bent parts, in particular of steel or aluminium, injection-moulded parts, in particular of SMC, or extruded profiles, in particular of aluminium.

4. Tailgate according to one of Claims 1 to 3, **characterized in that** the upper part (12) has a rear window (18).

5. Tailgate according to one of the preceding claims, **characterized in that** the skin (20) is produced from aluminium, steel sheet or coloured plastic.

6. Tailgate according to Claim 5, **characterized in that** the skin (20) is produced by an injection-moulding or deep-drawing process.

7. Tailgate according to one of the preceding claims, **characterized in that** the skin (20) is pressed to the support structure (22).

8. Tailgate according to one of the preceding claims, **characterized in that** the spacer (28) is designed as a hollow chamber structure, in particular honeycomb structure, of paper, plastic or metal.

9. Tailgate according to one of the preceding claims, **characterized in that** that side of the support structure (22) which faces the vehicle interior is provided with a decorative material (30) which is pressed to the support structure.

10. Tailgate according to one of the preceding claims, **characterized in that** insert elements (32), in particular of plastic or metal, are pressed into the support structure (22).

11. Tailgate according to one of the preceding claims, **characterized in that** the application of PU or fibre-reinforced PU is increased in the peripheral edge region (36) of the support structure (22) in order to seal the peripheral edge region.

## Revendications

1. Hayon arrière pour un véhicule automobile, comprenant une partie supérieure (12) pouvant être fixée à la carrosserie du véhicule et une partie inférieure (14) connectée fixement à l'extrémité inférieure de la partie supérieure, **caractérisé en ce que** la partie inférieure est réalisée sous forme de composant feuilleté qui présente une peau extérieure (20) et une structure porteuse (22) pour la peau extérieure, et la partie supérieure est pressée contre la structure porteuse de la partie inférieure.

2. Hayon arrière selon la revendication 1, **caractérisé en ce que** la structure porteuse (22) est formée par deux mats en fibre de verre (24, 26) pulvérisés avec du PU ou du PU renforcé par des fibres, notamment du PU renforcé LFI, entre lesquels se trouve un élément d'espacement (28) constitué d'une structure de chambre creuse ou d'une mousse de plastique.

3. Hayon arrière selon la revendication 1 ou 2, **caractérisé en ce que** la partie supérieure (12) présente des pièces pliées estampées, notamment en acier ou en aluminium, des pièces moulées par injection, notamment en SMC, ou des profilés filés, notamment en aluminium.

4. Hayon arrière selon l'une quelconque des revendications 1 à 3, **caractérisé en ce que** la partie supérieure (12) présente une vitre arrière (18).

5. Hayon arrière selon l'une quelconque des revendications précédentes, **caractérisé en ce que** la peau extérieure (20) est fabriquée en aluminium, en tôle d'acier ou en plastique coloré.

6. Hayon arrière selon la revendication 5, **caractérisé en ce que** la peau extérieure (20) est fabriquée par un procédé de moulage par injection ou un procédé d'emboutissage profond.

7. Hayon arrière selon l'une quelconque des revendications précédentes, **caractérisé en ce que** la peau extérieure (20) est pressée avec la structure porteuse (22).

8. Hayon arrière selon l'une quelconque des revendications précédentes, **caractérisé en ce que** l'élément d'espacement (28) est réalisé sous forme de structure de chambre creuse, notamment de structure en nid d'abeilles, en papier, en plastique ou en métal.

9. Hayon arrière selon l'une quelconque des revendications précédentes, **caractérisé en ce que** la structure porteuse (22) est munie sur le côté tourné vers l'habitacle du véhicule d'un matériau décoratif (30), qui est pressé avec la structure porteuse.

10. Hayon arrière selon l'une quelconque des revendications précédentes, **caractérisé en ce que** des éléments d'insertion (32) sont pressés dans la structure porteuse (22), notamment des éléments en plastique ou en métal.

11. Hayon arrière selon l'une quelconque des revendications précédentes, **caractérisé en ce que** dans la région de bord périphérique (36) de la structure porteuse (22), ou augmente l'apport de PU ou de PU renforcé par des fibres, afin de réaliser l'étanchéité de la région de bord périphérique.
